# EUROPEAN PATENT APPLICATION

(11) **EP 4 601 048 A1**
(43) Date of publication of application: **13.08.2025**
(21) Application number: 23885919.3
(22) Date of filing: 01.06.2023
(51) Int. Cl.: H01M 4/66, H01M 10/052, H01M 4/02

(54) **POSITIVE ELECTRODE CURRENT COLLECTOR FOR LITHIUM SECONDARY BATTERY, PREPARATION METHOD THEREFOR, AND LITHIUM SECONDARY BATTERY COMPRISING SAME**

(30) Priority: 31.10.2022 KR 20220143039
(71) Applicant: SK On Co., Ltd., Seoul 03161 (KR)
(72) Inventor: HWANG, Chang Mook, Daejeon 34124 (KR); KIM, Hyun Ji, Daejeon 34124 (KR); LEE, Jong Hyeok, Daejeon 34124 (KR); JO, Yoon Ji, Daejeon 34124 (KR)
(74) Representative: Prüfer & Partner mbB Patentanwälte · Rechtsanwälte
(86) International application number: PCT/KR2023/007498
(87) International publication number: WO 2024/096221

(57) **Abstract**

A cathode current collector for a lithium secondary battery according to embodiments of the present disclosure includes a stacked structure including an aluminum layer, an aluminum-copper alloy layer formed on the aluminum layer, and a copper layer formed on the aluminum-copper alloy layer, wherein a surface of the stacked structure may be doped with at least one metal element. Accordingly, the electrical conductivity of the cathode current collector may be improved and the cell resistance may be reduced.

## Description

### [Technical Field]

The present disclosure relates to a positive electrode ("cathode") current collector for a lithium secondary battery, a method of preparing the cathode current collector for a lithium secondary battery, and a lithium secondary battery including the cathode current collector for a lithium secondary battery.

### [Background Art]

A secondary battery is a battery that can be repeatedly charged and discharged. With rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. **In** this regard, the lithium secondary battery has been actively developed and applied to various industrial fields.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are housed.

In the lithium secondary battery, the cathode may be formed by applying a cathode active material to a cathode current collector, followed by drying and pressing the same. When the cathode active material is filled at a high density, the lithium secondary battery may exhibit high capacity and high output characteristics. In addition, by reducing the thickness of the cathode current collector, an amount of the cathode active material may increase without increasing the volume of the lithium secondary battery.

However, when increasing the density of the cathode active material, deformation such as wrinkling may occur in the cathode current collector due to expansion and contraction of the cathode active material layer during charging and discharging cycles, or the cathode current collector may be fractured. Further, when reducing the thickness of the cathode current collector, the resistance of the cathode current collector may increase.

For example, Korean Patent Registration No. 10-2283842 discloses an electrode current collector for a lithium secondary battery including a novel conductive material.

### [Summary of Invention]

### [Problems to be Solved by Invention]

An object of the present disclosure is to provide a cathode current collector for a lithium secondary battery with reduced resistance.

Another object of the present disclosure is to provide a method of preparing the cathode current collector for a lithium secondary battery.

In addition, another object of the present disclosure is to provide a lithium secondary battery including the cathode current collector for a lithium secondary battery.

### [Means for Solving Problems]

A cathode current collector for a lithium secondary battery according to exemplary embodiments may include a stacked structure which includes an aluminum layer, an aluminum-copper alloy layer formed on the aluminum layer, and a copper layer formed on the aluminum-copper alloy layer, wherein a surface of the stacked structure may be doped with at least one metal element.

In some embodiments, the aluminum-copper alloy layer may include at least one of Al₂Cu, AlCu and AlCu₂.

In some embodiments, the aluminum-copper alloy layer may have a stacked structure including two or more of an Al₂Cu-containing layer, an AlCu-containing layer, and an AlCu₂-containing layer.

In some embodiments, the copper layer may include an undoped layer disposed on the aluminum-copper alloy layer and not doped with the metal element, and a metal doping layer disposed on the undoped layer and doped with the metal element.

In some embodiments, the metal doping layer may include copper doped with the metal element.

In some embodiments, the metal element may include at least one element of nickel, magnesium and zinc.

In some embodiments, the metal element may include nickel, magnesium and zinc.

In some embodiments, a content of zinc among the metal elements may be equal to or greater than a sum of the content of nickel and the content of magnesium.

In some embodiments, a doping content of the metal element may be 0.1% by weight to 3% by weight based on a total weight of the stacked structure.

A lithium secondary battery according to exemplary embodiments may include: a cathode which includes the above-described cathode current collector and a cathode active material layer formed on at least one surface of the cathode current collector; and an anode disposed to face the cathode.

In a method of preparing a cathode current collector for a lithium secondary battery according to exemplary embodiments, an aluminum foil and a copper foil may be hot rolled to form a first preliminary current collector including an aluminum-copper alloy layer. The first preliminary current collector may be heat treated to dope a surface of the first preliminary current collector with a metal element.

In some embodiments, the aluminum-copper alloy layer may be formed between the aluminum foil and the copper foil.

In some embodiments, the step of heat treating the first preliminary current collector may include: performing a cold rolling process on the first preliminary current collector; and performing an annealing process on the cold-rolled first preliminary current collector.

In some embodiments, the surface of the first preliminary current collector may be doped with a metal element by the annealing process.

In some embodiments, the method may further include, after the cold rolling process and before the annealing process, applying a doping solution containing the metal element to the surface of the cold-rolled first preliminary current collector.

In some embodiments, the cold rolling process and the annealing process may be performed repeatedly.

In some embodiments, the cold rolling process and the annealing process may include: first cold rolling the first preliminary current collector to form a second preliminary current collector; performing a first annealing process on the second preliminary current collector to form a third preliminary current collector; second cold rolling the third preliminary current collector to form a fourth preliminary current collector, and performing a second annealing process on the fourth preliminary current collector.

In some embodiments, a temperature of the first annealing process may be higher than a temperature of the second annealing process.

### [Advantageous effects]

According to exemplary embodiments, the cathode current collector for a lithium secondary battery may include a stacked structure including an aluminum layer, an aluminum-copper alloy layer and a copper layer, which are sequentially disposed. The surface of the stacked structure may be doped with metal elements such as nickel, magnesium and zinc. Accordingly, the energy density and electrical conductivity of the lithium secondary battery may be improved, and the resistance may be reduced.

In addition, the doping content of the metal element may be 0.1 to 3% by weight ("wt%") based on the total weight of the stacked structure. Accordingly, the capacity characteristics may be improved while reducing the resistance of the secondary battery.

### [Brief Description of Drawings]

FIGS. 1 to 5 are schematic cross-sectional views illustrating cathode current collectors for lithium secondary batteries according to exemplary embodiments.
FIG. 6 and FIG. 7 are schematic flowcharts for describing a method of preparing cathode current collectors for lithium secondary batteries according to exemplary embodiments.
FIG. 8 is a schematic cross-sectional view illustrating a cathode for a lithium secondary battery according to exemplary embodiments.
FIGS. 9 and 10 are a schematic plan view and a cross-sectional view illustrating a lithium secondary battery according to exemplary embodiments.

### [Mode for Carrying out Invention]

Exemplary embodiments of the present disclosure provide a cathode current collector for a lithium secondary battery including aluminum, copper and a doping metal, and a method of preparing the same. In addition, a lithium secondary battery including the cathode current collector for a lithium secondary battery is also provided.

Hereinafter, the embodiments of the present invention will be described in detail with reference to the accompanying drawings. However, since the drawings attached to the present disclosure are only given for illustrating one of several preferred embodiments of present invention to easily understand the technical spirit of the present invention with the above-described invention, it should not be construed as limited to such a description illustrated in the drawings.

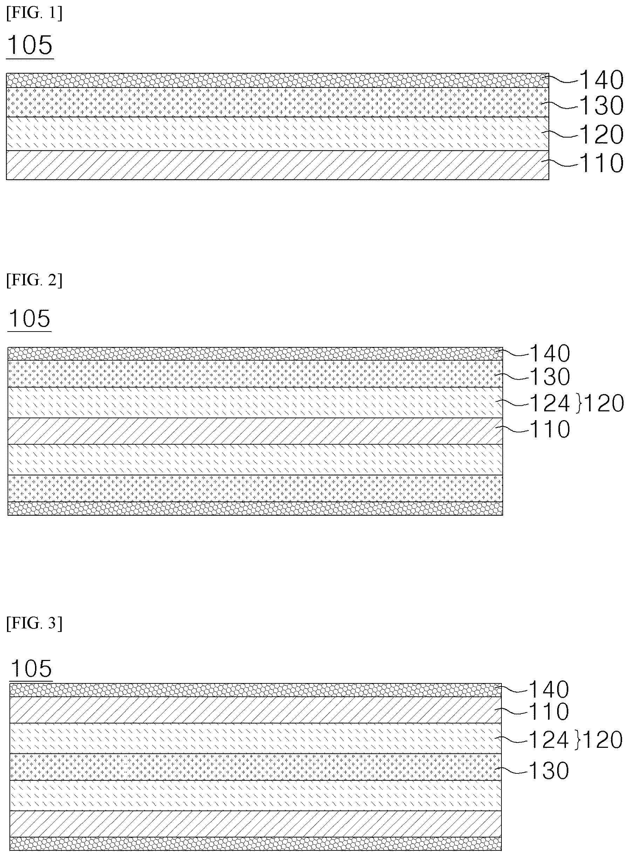

FIGS. 1 to 5 are schematic cross-sectional views illustrating cathode current collectors for a lithium secondary battery according to exemplary embodiments.

Referring to FIG. 1, a cathode current collector 105 according to an embodiment may include a stacked structure including an aluminum (Al) layer 110, an aluminum-copper alloy layer 120 formed on the aluminum layer 110, and a copper (Cu) layer formed on the aluminum-copper alloy layer 120. The surface of the stacked structure may be doped with at least one metal element.

Accordingly, the cathode current collector 105 may maintain high electrical conductivity even when its thickness is reduced, thereby improving the energy density of the cathode 100. In addition, by arranging copper having a high theoretical capacity in an outer layer, even when a high-density cathode active material layer is formed on the cathode current collector 105, deformation and fracture of the cathode current collector 105 may be suppressed.

According to exemplary embodiments, the surface of the copper layer may be doped with a metal element.

For example, the copper layer may include an undoped layer 130 disposed on the aluminum-copper alloy layer 120, and a metal doping layer 140 disposed on the undoped layer 130 and doped with the metal element.

The undoped layer 130 may be a layer which is not doped with the metal element. For example, the undoped layer 130 may be a copper metal layer which does not include the doped metal.

In some embodiments, the metal elements may be doped on the surface and surface layer of the copper layer, and then may diffuse into the copper layer. Accordingly, the metal doping layer 140 including the copper doped in the surface region of the copper layer may be formed.

Accordingly, the electrical conductivity of the cathode current collector 105 may be improved, and a rapid change in composition of the doped copper formed on the surface of the copper layer may be mitigated.

In some embodiments, the metal elements may include at least one element of nickel, magnesium and zinc.

Accordingly, the electrical conductivity of the cathode current collector 105 may be improved due to the high electrical conductivity of the nickel, the magnesium and the zinc.

In some embodiments, a doping content of the metal elements (e.g., nickel, magnesium and/or zinc) may be 0.1 wt% to 3 wt%, or 0.3 wt% to 1.5 wt% based on the total weight of the stacked structure.

Within the above range, the electrical conductivity of the stacked structure may be improved due to the doping of the metal elements. In addition, excessive diffusion of the doping elements into the copper layer may be prevented, thereby suppressing excessive expansion of the metal doping layer in the cathode current collector.

In some embodiments, the metal elements may include all of nickel, magnesium and zinc. For example, the copper layer may be surface-doped with all of nickel, magnesium and zinc.

In one embodiment, the doping content of the zinc may be higher than a sum of the doping content of the nickel and the doping content of the magnesium. Accordingly, the electrical conductivity of the cathode current collector may be improved, thereby reducing the resistance of the lithium secondary battery.

For example, the doping content of the nickel or the magnesium may be 0.1 wt% to 3 wt%, or 0.1 wt% to 0.5 wt% based on the total weight of the stacked structure.

For example, the doping content of zinc may be 0.1 wt% to 3 wt%, or 0.3 wt% to 1.0 wt% based on the total weight of the stacked structure.

Referring to FIG. 2, a cathode current collector 105 according to another embodiment may include a stacked structure including an aluminum layer 110, aluminum-copper alloy layers 120 formed on both surfaces of the aluminum layer 110, and copper layers respectively formed on the aluminum-copper alloy layers 120.

Both surfaces of the stacked structure may be doped with metal elements. For example, the copper layer may include an undoped layer 130 and a metal doping layer 140 doped with the metal elements.

Accordingly, the cathode current collector 105 may not undergo fracture, even when a high-density active material layer is formed thereon.

In some embodiments, the positions of the copper layer and the aluminum layer 110 may be changed, that is, their arrangement may be reversed.

Referring to FIG. 3, a cathode current collector 105 according to another embodiment may include copper layers, aluminum-copper alloy layers 120 formed on both surfaces of the copper layer, and aluminum layers 110 respectively formed on the aluminum-copper alloy layers 120.

Accordingly, the electrical conductivity of the cathode current collector 105 may be improved, and price competitiveness may be secured.

When the copper layer is positioned at the center of the stacked structure, the metal element may be doped into the surface of the aluminum layer 110. For example, the aluminum layer 110 may include an undoped layer 130 disposed on the aluminum-copper alloy layer 120, and a metal doping layer 140 disposed on the undoped layer 130. The metal doping layer 140 may include aluminum doped with the metal element.

According to exemplary embodiments, the aluminum-copper alloy layer 120 may include at least one of Al₂Cu, AlCu and AlCu₂. For example, the aluminum-copper alloy of the aluminum-copper alloy layer 120 may include at least one of alloys represented by Al₂Cu, AlCu and AlCu₂.

In some embodiments, the aluminum-copper alloy layer 120 may have a single composition. For example, the aluminum-copper alloy layer 120 may be formed as a single layer containing AlCu.

In some embodiments, the composition of the aluminum-copper alloy in the aluminum-copper alloy layer 120 may sequentially change. For example, the aluminum and copper concentrations in the aluminum-copper alloy layer 120 may change from the aluminum layer 110 toward the copper layer. The term "concentration" as used herein may refer to, for example, a molar ratio or an atomic percentage (%) of aluminum to copper.

In some embodiments, the copper concentration in the aluminum-copper alloy layer 120 may increase toward the copper layer. In some embodiments, the aluminum concentration in the aluminum-copper alloy layer 120 may decrease toward the copper layer.

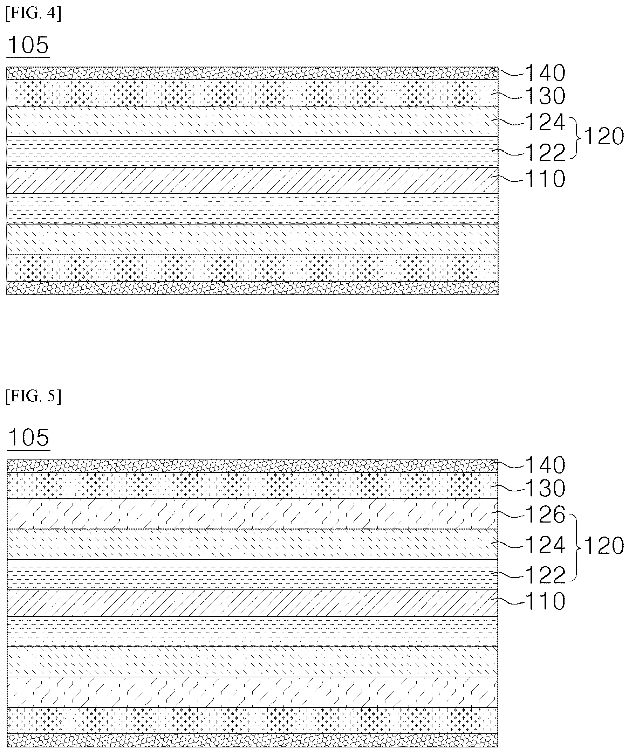

Referring to FIG. 4, the aluminum-copper alloy layer 120 may contain Al₂Cu and AlCu as an aluminum-copper alloy.

According to exemplary embodiments, the aluminum-copper alloy layer 120 may include a stacked structure including an Al₂Cu-containing layer 122 and an AlCu-containing layer 124.

In some embodiments, the aluminum-copper alloy layer 120 may include the Al₂Cu-containing layer 122, the AlCu-containing layer 124 sequentially disposed from the aluminum layer 110. For example, a cathode current collector 105 according to another embodiment may include an aluminum layer 110, the Al₂Cu-containing layers 122 formed on both surfaces of the aluminum layer 110, the AlCu-containing layers 124 formed on the Al₂Cu-containing layers 122, and copper layers formed on the AlCu-containing layers 124.

Accordingly, deformation and fracture of the cathode current collector 105 may be prevented, and the energy density of the cathode may be improved.

Referring to FIG. 5, the aluminum-copper alloy layer 120 may include Al₂Cu, AlCu and AlCu₂ as an aluminum-copper alloy.

According to exemplary embodiments, the aluminum-copper alloy layer 120 may include a stacked structure including an Al₂Cu-containing layer 122, an AlCu-containing layer 124 and an AlCu₂-containing layer 126.

In some embodiments, the Al₂Cu-containing layer 122, the AlCu-containing layer 124, and the AlCu₂-containing layer 126 may be sequentially disposed from the aluminum layer 110. For example, a cathode current collector 105 according to another embodiment may include an aluminum layer 110, the Al₂Cu-containing layers 122 formed on both surfaces of the aluminum layer 110, the AlCu-containing layers 124 formed on the Al₂Cu-containing layers 122, AlCu₂-containing layers 126 formed on the AlCu-containing layers 124, and copper layers formed on the AlCu₂-containing layers 126.

The aluminum-copper alloy layer 120 including the Al₂Cu-containing layer 122, the AlCu-containing layer 124 and the AlCu₂-containing layer 126 may implement a gradual change in alloy composition with respect to the difference in composition between the aluminum layer 110 and the copper layer.

Accordingly, the aluminum-copper alloy layer 120 may serve as a buffer layer for the the change in composition between the aluminum layer 110 and the copper layer, and may prevent the separation between the aluminum layer 110 and the copper layer.

In some embodiments, the aluminum layer 110 may have a thickness of 3 µm to 15 µm, or 4 µm to 10 µm. Within the above range, the thickness of the cathode current collector 105 may be reduced, thereby increasing the volumetric energy density of the secondary battery.

In some embodiments, the aluminum-copper alloy layer 120 may have a thickness of 0.1 µm to 3 µm, or 0.5 µm to 1.5 µm. Within the above range, the aluminum-copper alloy layer 120 may sufficiently serve as a buffer layer for the the change in composition between the aluminum layer 110 and the copper layer.

In some embodiments, the copper layer may have a thickness of 1 µm to 10 µm, or 3 µm to 7 µm. Within the above range, while the price competitiveness of the cathode current collector 105 is secured, deformation or fracture of the cathode current collector 105 may be suppressed due to the high theoretical capacity of the copper layer even when a high-density active material layer is formed thereon.

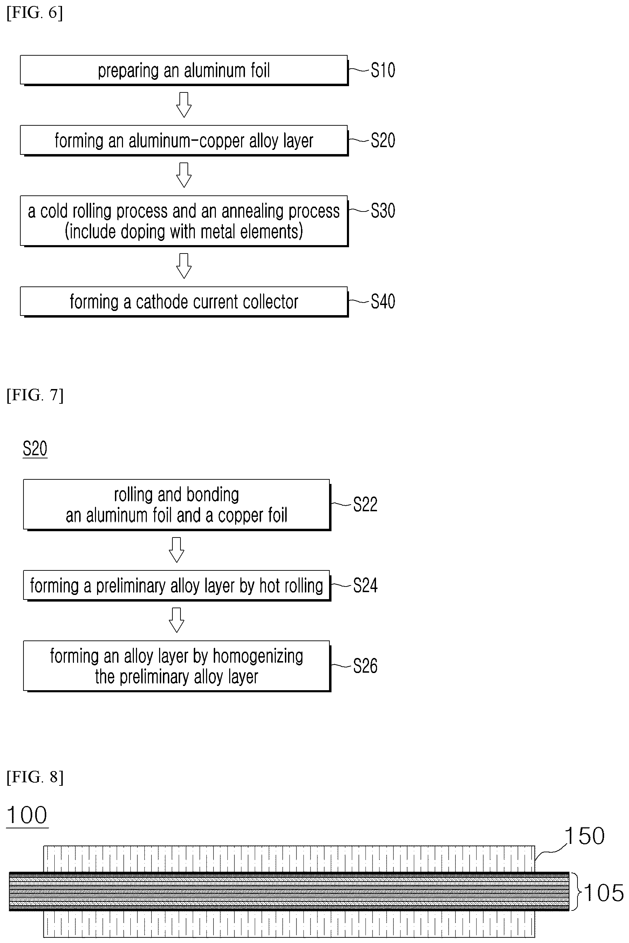

FIG. 6 and FIG. 7 are schematic flowcharts for describing a method of preparing a cathode current collector for a lithium secondary battery according to exemplary embodiments. FIG. 7 is a detailed flowchart of process S20 in FIG. 6.

Referring to FIGS. 6 and 7, an aluminum foil may be prepared (e.g., process S10).

According to exemplary embodiments, an aluminum ingot may be cast from an aluminum alloy, and the aluminum ingot may be subjected to homogenization and hot rolling to prepare an aluminum foil.

In some embodiments, the aluminum ingot may be cast from an aluminum alloy.

An aluminum alloy may be melted by putting it into a melting furnace and heating it to a temperature equal to or higher than the melting point of aluminum. For example, the aluminum alloy may be heated to 700°C or higher, or 800°C or higher to melt the aluminum in the aluminum alloy. The molten aluminum may be put into a mold, and the mold may be cooled to a temperature equal to or lower than the melting point of aluminum. Accordingly, a high-purity aluminum ingot may be cast from the aluminum alloy.

In some embodiments, the aluminum ingot may be heat treated to achieve homogenization.

For example, the aluminum ingot may be heat treated at 350°C to 600°C, or 400°C to 550°C to achieve homogenization of the aluminum ingot. Within the above range, segregation within the aluminum crystal grains may be effectively removed, and the aluminum crystal grains may be refined.

In some embodiments, the homogenized aluminum ingot may be hot rolled to prepare an aluminum foil.

For example, the homogenized aluminum ingot may be heat treated at 350°C to 500°C, or 400°C to 450°C, followed by hot rolling. Within the above range, the aluminum crystal grains may be recrystallized without segregation being formed within the aluminum crystal grains, thereby forming an aluminum foil.

According to exemplary embodiments, a copper foil may be bonded to the aluminum foil prepared through the above-described process, followed by hot rolling and homogenization, to form a first preliminary current collector including an aluminum-copper alloy layer (e.g., process S20).

In some embodiments, a copper foil may be placed on the aluminum foil, and then rolled to form a first preliminary alloy layer (e.g., process S22).

For example, a copper foil may be placed on the aluminum foil, and then the aluminum foil and the copper foil may be bonded using a roll-to-roll process. The roll-to-roll process may be performed at, for example, 250°C to 450°C, or 300°C to 400°C. Within the above range, the aluminum foil and the copper foil may be recrystallized and bonded without cracks caused by excessive high or low temperatures.

In some embodiments, the first preliminary alloy layer may be hot rolled to form a second preliminary alloy layer (e.g., process S24).

The first preliminary alloy layer is hot rolled, such that aluminum and copper may be recrystallized at a portion where the aluminum foil and the copper foil come into contact. Through the recrystallization of aluminum and copper, an aluminum-copper alloy, for example, represented by Al₂Cu, AlCu and/or AlCu₂, may be formed.

For example, the aluminum foil and copper foil bonded at 500°C to 700°C, or 550°C to 650°C may be heat treated to initiate hot rolling. Within the above range, the aluminum foil and the copper foil may undergo recrystallization without melting, thereby forming an aluminum-copper alloy.

For example, hot rolling may be completed at 300°C to 450°C, or 300°C to 400°C. Within the above range, recrystallization may be completed without generating ridging marks, thereby forming an aluminum-copper alloy.

In some embodiments, the second preliminary alloy layer may be subjected to homogenization to form a first preliminary current collector including an aluminum-copper alloy layer (e.g., process S26).

For example, the first preliminary current collector including the preliminary aluminum-copper alloy layer may be heat treated at 300°C to 500°C, or 400°C to 450°C to initiate homogenization. Within the above range, recrystallization may proceed without causing segregation in the aluminum-copper alloy.

For example, the first preliminary current collector including the preliminary aluminum-copper alloy layer may be heat treated at 250°C to 450°C, or 300°C to 400°C, to complete homogenization. Within the above range, recrystallization may be completed without generating ridging marks, thereby forming the first preliminary current collector including the aluminum-copper alloy layer.

According to exemplary embodiments, the first preliminary current collector may be heat treated, followed by doping of a metal element on the surface of the first preliminary current collector, to prepare the cathode current collector 105 (e.g., processes S30 and S40).

According to some embodiments, the process of heat treating the first preliminary current collector may include performing a cold rolling process on the first preliminary current collector, and subsequently performing an annealing process on the cold-rolled first preliminary current collector.

In some embodiments, the method may include applying a doping solution containing the metal element to the surface of the cold-rolled first preliminary current collector after the cold rolling process before the annealing process.

In some embodiments, the doping solution applied to the surface of the first preliminary current collector may be doped into the first preliminary current collector by the annealing process. The metal element may include, for example, nickel (Ni), magnesium (Mg), and/or zinc (Zn).

For example, the metal elements (for example, nickel, magnesium, and/or zinc elements) may diffuse in a horizontal or vertical direction on the surface of the first preliminary current collector during the annealing process. Accordingly, the metal elements may be doped into the surface and surface layer of the copper layer.

For example, the total weight of the metal elements based on the total weight of the first preliminary current collector may be 0.1 wt% to 3 wt%, or 0.5 wt% to 1.5 wt%. Within the above range, the metal elements may be doped into the copper layer while forming a layer, and the content of undoped copper may be prevented from being excessively reduced, thereby preventing deterioration in the capacity characteristics of the secondary battery.

In some embodiments, the cold rolling process and the annealing process may be repeatedly performed.

In some embodiments, the first preliminary current collector may be first cold rolled to form a second preliminary current collector having a reduced thickness.

For example, a ratio of the thickness of the second preliminary current collector to the thickness of the first preliminary current collector may be 0.4 to 0.6, or 0.45 to 0.55. Accordingly, the second preliminary current collector may be formed while preventing the formation of cracks caused by excessive rolling.

For example, the first cold rolling may be performed at 10°C to 120°C, or 25°C to 100°C. Within the above range, the mechanical strength and hardness of the second preliminary current collector may be improved.

In some embodiments, the second preliminary current collector may be subjected to a first annealing process to form a third preliminary current collector.

For example, the temperature at which the first annealing process is performed may be higher than the temperature of the second annealing process which will be described below. For example, the first annealing process may be performed on the second preliminary current collector, for example, at 300°C to 450°C, or 350°C to 400°C. Within the above range, the internal stress of the second preliminary current collector may be removed and softened.

For example, the first annealing may be performed on the second preliminary current collector for 1 hour to 3 hours, or 1 hour to 2 hours, for example. Within the above range, both the copper and aluminum-copper alloys may be annealed and softened.

In some embodiments, the third preliminary current collector may be second cold rolled to form a fourth preliminary current collector having a reduced thickness.

For example, a ratio of the thickness of the fourth preliminary current collector to the thickness of the first preliminary current collector may be 0.02 to 0.1, or 0.04 to 0.06. Accordingly, a fourth preliminary current collector having a reduced thickness with improved mechanical strength may be formed.

For example, the second cold rolling may be performed at 10°C to 120°C, or 25°C to 100°C. Within the above range, the mechanical strength and hardness of the fourth preliminary current collector may be improved.

In some embodiments, the second annealing may be performed on the fourth preliminary current collector to form the cathode current collector 105.

For example, the temperature at which the second annealing process is performed may be lower than the temperature of the above-described first annealing process. For example, the second annealing may be performed on the fourth preliminary current collector, for example, at 200°C to 450°C, or 200°C to 400°C. Within the above range, the internal stress of the fourth preliminary current collector may be removed and softened, and metal crystals may be refined.

For example, the second annealing may be performed on the fourth preliminary current collector, for example, for 3 hours to 24 hours, or 5 hours to 20 hours. Within the above range, aluminum, aluminum-copper alloy, and copper may be sufficiently annealed and softened, and impurities (e.g., rolling oil) may be volatilized and removed.

In some embodiments, the above-described first annealing process and the second annealing process may include doping with metal elements.

In some embodiments, the fourth preliminary current collector may be cooled to room temperature (25°C) at a rate of 40°C/hr to 60°C/hr, or 45°C/hr to 55°C/hr, for example. Accordingly, the ductility and strength of the cathode current collector 105 may be improved.

FIG. 8 is a schematic cross-sectional view illustrating a cathode for a lithium secondary battery according to exemplary embodiments.

Referring to FIG. 8, a cathode 100 may include a cathode current collector 105 and a cathode active material layer 150 formed by applying a cathode active material to the cathode current collector 105.

The cathode 100 may be prepared by coating the cathode current collector 105 with a cathode slurry, followed by compression and drying. The cathode slurry may be prepared by mixing and stirring the cathode active material with a binder, a conductive material and/or a dispersant in a solvent.

According to exemplary embodiments, the cathode current collector 105 may include the above-described aluminum layer 110, the aluminum-copper alloy layer 120 and the copper layer. In some embodiments, the aluminum-copper alloy layer 120 may include an Al₂Cu layer, an AlCu layer, and/or an AlCu₂ layer. Accordingly, even when the amount of the cathode active material included in the cathode active material layer 150 increases, an occurrence of the deformation and fracture of the cathode current collector 105 may be prevented.

According to exemplary embodiments, the cathode active material may include a compound capable of reversibly intercalating and deintercalating lithium ions. The cathode active material may include lithium-transition metal composite oxide particles. For example, the lithium-transition metal composite oxide particles include nickel (Ni), and may further include at least one of cobalt (Co) and manganese (Mn).

For example, the lithium-transition metal composite oxide particles may be represented by Formula 1 below.

[Formula 1] LiₓNi_{1-y}M_{y}O_{2+z}

In Formula 1, x may be in a range of 0.9≤x≤1.1, y may be in a range of 0≤y≤0.7, and z may be in a range of -0.1≤z≤0.1. M may represent one or more elements selected from Na, Mg, Ca, Y, Ti, Zr, Hf, V, Nb, Ta, Cr, Mo, W, Mn, Co, Fe, Cu, Ag, Zn, B, Al, Ga, C, Si or Sn.

The cathode binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or aqueous binder such as styrene-butadiene rubber (SBR), and may be used together with a thickener such as carboxymethyl cellulose (CMC).

For example, a PVDF-based binder may be used as the cathode binder. In this case, an amount of the binder for forming the cathode active material layer may be reduced and an amount of the cathode active material may be relatively increased, thereby improving the output and capacity of the secondary battery.

The conductive material may be included to facilitate electron transfer between the active material particles. For example, the conductive material may include a carbon-based conductive material such as graphite, carbon black, graphene, or carbon nanotubes and/or a metal-based conductive material including tin, tin oxide, titanium oxide, or a perovskite material such as LaSrCoO₃, and LaSrMnO₃, etc.

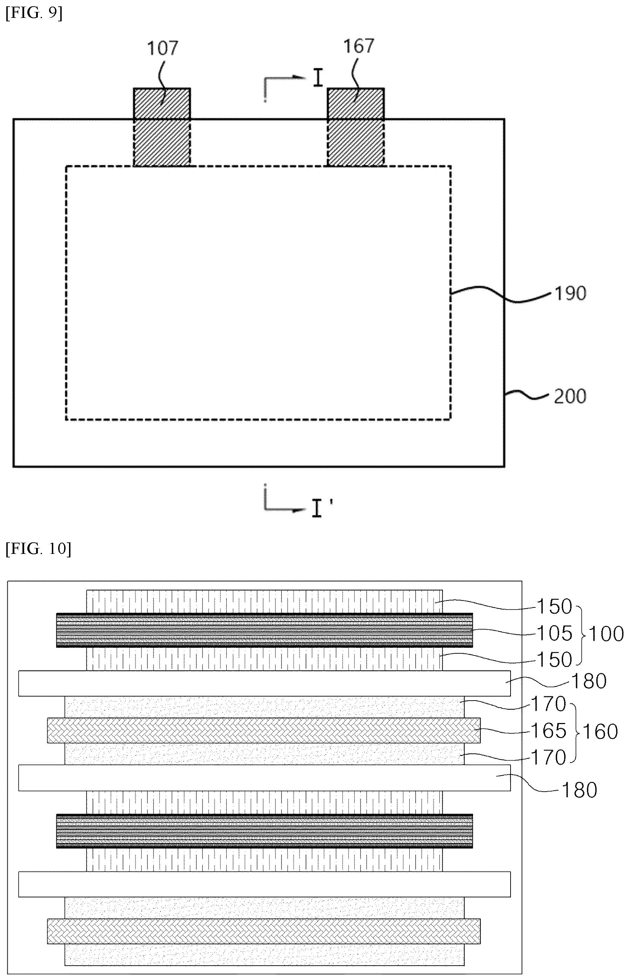

FIGS. 9 and 10 are a schematic plan view and a cross-sectional view illustrating a lithium secondary battery according to exemplary embodiments, respectively. FIG. 10 is a cross-sectional view taken on line I-I' in FIG. 9 in a thickness direction of the battery.

Referring to FIGS. 9 and 10, the lithium secondary battery may include the cathode 100 including the above-described cathode current collector 105 and an anode 160 disposed to face the cathode.

According to exemplary embodiments, the anode 160 may include an anode current collector 165 and an anode active material layer 170 formed by coating the anode current collector 165 with an anode active material.

The anode active material usable in the present invention may include any material known in the related art, so long as it can intercalate and deintercalate lithium ions, without particular limitation thereof. For example, carbon-based materials such as crystalline carbon, amorphous carbon, carbon composite, carbon fiber, etc.; a lithium alloy; a silicon (Si) compound or tin, etc. may be used. Examples of the amorphous carbon may include hard carbon, cokes, mesocarbon microbead (MCMB) calcined at 1600°C or lower, mesophase pitch-based carbon fiber (MPCF) or the like.

Examples of the crystalline carbon may include graphite-based carbon such as natural graphite, graphite cokes, graphite MCMB, graphite MPCF or the like. Other elements included in the lithium alloy may include, for example, aluminum, zinc, bismuth, cadmium, antimony, silicon, lead, tin, gallium or indium, etc.

The silicon-based active material may include SiOₓ (0<x<2) or SiOₓ (0<x<2) containing a lithium compound. The SiOₓ containing the Li compound may be SiOₓ including lithium silicate. The lithium silicate may be present in at least a portion of SiOₓ (0<x<2) particles, for example, may be present inside and/or on the surface of the SiOₓ (0<x<2) particles. In one embodiment, the lithium silicate may include Li₂SiO₃, Li₂Si₂O₅, Li₄SiO₄, Li₄Si₃O₈, etc.

The silicon-based active material may also include a silicon-carbon composite compound such as silicon carbide (SiC).

The anode current collector 165 may include, for example, gold, stainless steel, nickel, aluminum, titanium, copper or an alloy thereof, and in one embodiment, the anode current collector 165 may include copper or a copper alloy.

For example, a slurry may be prepared by mixing the anode active material with the above-described binder, conductive material, thickener, and the like in a solvent, and stirring the mixture. The slurry may be applied to at least one surface of the anode current collector 165, followed by compression and drying the same to prepare the anode 160 including the anode active material layer 170.

As the binder and the conductive material, materials which are substantially the same as or similar to the above-described materials may be used. In some embodiments, a binder for forming an anode may include, for example, an aqueous binder such as styrene-butadiene rubber (SBR) to ensure compatibility with a carbon-based active material, and may be used together with a thickener such as carboxymethyl cellulose (CMC).

In some embodiments, a separation membrane 180 may be interposed between the cathode 100 and the anode 160. The separation membrane 180 may include a porous polymer film made of a polyolefin polymer such as ethylene homopolymer, propylene homopolymer, ethylene/butene copolymer, ethylene/hexene copolymer, ethylene/methacrylate copolymer. The separation membrane 180 may include a nonwoven fabric made of glass fibers having a high melting point, polyethylene terephthalate fibers, etc.

In some embodiments, the anode 160 may have an area (e.g., a contact area with the separation membrane 180) and/or volume larger than those/that of the cathode 100. Thereby, lithium ions generated from the cathode 100 may smoothly migrate to the anode 160 without being precipitated during the process, for example. Accordingly, the effect of simultaneous improvement of output and stability through combination with the above-described composite hydroxide particles or cathode active material may be more easily implemented.

According to exemplary embodiments, an electrode cell is defined by the cathode 100, the anode 160 and the separation membrane 180, and a plurality of electrode cells may be stacked to form an electrode assembly 190.

The electrode assembly 190 may be housed together with an electrolyte in an outer case 200 to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, γ-butyrolactone, propylene sulfite, tetrahydrofuran, and the like may be used. These compounds may be used alone or in combination of two or more thereof.

As shown in FIG. 9, electrode tabs (a cathode tab and an anode tab) may protrude from the cathode current collector 105 and the anode current collector 165, respectively, which belong to each electrode cell, and may extend to one side of the case 200. The electrode tabs may be fused together with the one side of the case 200 to form electrode leads (a cathode lead 107 and an anode lead 167) extending or exposed to the outside of the case 200.

The lithium secondary battery may be manufactured, for example, in a cylindrical shape using a can, a prismatic shape, a pouch-type shape or a coin shape.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

### Examples and Comparative Examples

### Example 1

### 1) Preparation of cathode current collector

A cathode current collector (total thickness: 9 µm) was prepared by forming an aluminum layer having a thickness of 4 µm, aluminum-copper alloy layers each having a thickness of 1 µm on both surfaces of the aluminum layer, and copper layers having a thickness of 1.5 µm on the aluminum-copper alloy layers.

Specifically, copper foils were bonded on both surfaces of an aluminum foil using a roll-to-roll process. A metal foil, in which the aluminum foil and the copper foil were bonded, was hot rolled at 600°C to form an preliminary aluminum-copper alloy layer through the recrystallization of aluminum and copper. An aluminum-copper alloy layer was performed by heat treating the preliminary aluminum-copper alloy layer at 450°C to achieve homogenization. Thereafter, the first cold rolling process, first annealing process (during which primary doping with a metal element is simultaneously performed), second cold rolling process, and second annealing process (during which secondary doping with the metal element is simultaneously performed) were performed to prepare a cathode current collector including the aluminum-copper alloy layer. The first annealing process was performed at 400°C, and the metal element was primarily doped into and diffused across the surface of the copper layer simultaneously with the first annealing process. The second annealing process was performed at 350°C, and simultaneously with the second annealing process, the surface of the copper layer that was primarily doped with the metal element is secondarily doped with the metal element and further diffused. The cathode current collector had a protrusion part on one side thereof for forming a cathode tab.

The aluminum-copper alloy layer was formed in the order of an Al₂Cu layer, an AlCu layer and an AlCu₂ layer from the aluminum layer at the center.

The metal element is nickel, and the cathode current collector was doped with nickel element so that its weight accounts for 0.5 wt% based on the total weight of the cathode current collector.

### 2) Preparation of cathode

LiNi_{0.6}Co_{0.2}Mn_{0.2}O₂ as a cathode active material, carbon black as a cathode conductive material, and polyvinylidene fluoride (PVDF) as a cathode binder were mixed in a weight ratio of 95:3:2 to prepare a cathode slurry, and then the cathode slurry was applied to a region of the cathode current collector except for the cathode tab bonding part, followed by drying and pressing the same, to form a cathode active material layer.

### 3) Preparation of anode

An anode active material obtained by mixing artificial graphite and natural graphite in a weight ratio of 7:3; styrene-butadiene rubber; and carboxymethyl cellulose were dispersed in distilled water in a weight ratio of 97:1:2 to prepare an anode slurry.

The anode slurry was applied to a region of a copper foil having a protrusion part (anode tab) except for the protrusion part, followed by drying and pressing the same, to prepare an anode.

### 4) Manufacture of lithium secondary battery

A polyethylene separation membrane (thickness: 20 µm) was interposed between the cathode and the anode to form a unit electrode assembly. An electrode assembly was formed by stacking the unit electrode assemblies to have a capacity of 80 Ah. A cathode lead and an anode lead were respectively welded and connected to the cathode tab and the anode tab.

A 1 M LiPF₆ solution (a mixed solvent of EC and EMC in a volume ratio of 30:70) was prepared, and then 1 wt% of fluoroethylene carbonate (FEC), 0.3 wt% of vinylethylene carbonate (VC), 1 wt% of lithium difluorophosphate (LiPO₂F₂), 0.5 wt% of 1,3-propane sultone (PS), and 0.5 wt% of prop-1-ene-1,3-sultone (PRS) were added thereto in the above-described contents based on 100 wt% of the total electrolyte, to prepare an electrolyte.

The electrode assembly was housed in a pouch (case) so that some regions of the cathode lead and the anode lead were exposed to the outside of the pouch, followed by sealing three sides of the pouch except for a side of an electrolyte injection part.

The electrolyte was injected into the pouch, and the side of the electrolyte injection part was sealed to manufacture a lithium secondary battery.

### Example 2

A lithium secondary battery was manufactured in the same manner as in Example 1, except that the doped metal element was magnesium, and the magnesium element was doped to have a weight of 0.5 wt% based on the total weight of the cathode current collector.

### Example 3

A lithium secondary battery was manufactured in the same manner as in Example 1, except that the doped metal element was zinc, and the zinc element was doped to have a weight of 0.5 wt% based on the total weight of the cathode current collector.

### Example 4

A lithium secondary battery was manufactured in the same manner as in Example 1, except that the doped metal elements were nickel and magnesium, and the nickel and magnesium elements were doped to have a weight of 0.2 wt% and 0.3 wt%, respectively, based on the total weight of the cathode current collector.

### Example 5

A lithium secondary battery was manufactured in the same manner as in Example 1, except that the doped metal elements were nickel and magnesium, and the nickel and magnesium elements were doped to have a weight of 0.3 wt% and 0.2 wt%, respectively, based on the total weight of the cathode current collector.

### Example 6

A lithium secondary battery was manufactured in the same manner as in Example 1, except that the doped metal elements were nickel, magnesium and zinc, and the nickel, magnesium and zinc elements were doped to have a weight of 0.1 wt%, 0.1 wt% and 0.3 wt%, respectively, based on the total weight of the cathode current collector.

### Example 7

A lithium secondary battery was manufactured in the same manner as in Example 1, except that the doped metal elements were nickel, magnesium and zinc, and the nickel, magnesium and zinc elements were doped to have a weight of 0.1 wt%, 0.1 wt% and 0.5 wt%, respectively, based on the total weight of the cathode current collector.

### Example 8

A lithium secondary battery was manufactured in the same manner as in Example 1, except that the doped metal elements were nickel, magnesium and zinc, and the nickel, magnesium and zinc elements were doped to have a weight of 0.1 wt%, 0.1 wt% and 1.0 wt%, respectively, based on the total weight of the cathode current collector.

### Example 9

A lithium secondary battery was manufactured in the same manner as in Example 1, except that a cathode current collector (thickness: 15 µm) was prepared by forming an aluminum layer having a thickness of 4 µm, aluminum-copper alloy layers each having a thickness of 1.5 µm on both surfaces of the aluminum layer, and copper layers each having a thickness of 4 µm on the aluminum-copper alloy layers.

### Comparative Example 1

A lithium secondary battery was manufactured in the same manner as in Example 1, except that no metal element was doped during the preparation of the cathode current collector.

### Comparative Example 2

A cathode current collector was prepared using an aluminum foil with a thickness of 15 µm. Then, a lithium secondary battery was manufactured in the same manner as in Example 1, except that no metal element was doped during the preparation of the cathode current collector.

### Comparative Example 3

A cathode current collector (thickness: 15 µm) was prepared by forming an aluminum layer having a thickness of 4 µm, aluminum-copper alloy layers each having a thickness of 1.5 µm on both surfaces of the aluminum layer, and copper layers each having a thickness of 4 µm on the aluminum-copper alloy layers.

Then, a lithium secondary battery was manufactured in the same manner as in Example 1, except that no metal element was doped during the preparation of the cathode current collector.

### Experimental Example

### (1) Measurement of fracture rolling density

When preparing the cathode of a lithium secondary battery according to the examples and comparative examples, a cathode slurry was coated on the cathode current collector with a loading amount of 20 m g/cm². Thereafter, the cathode slurry was initially rolled at a density of 3.7 g/cm³, and if there was no fracture, the rolling density was increased by 0.05 g/cm³ at an interval of 100 m to measure the critical fracture density at which the first fracture occurred.

### (2) Measurement of resistance of the cathode current collector

A constant current was applied to the surface of the battery electrode, and a volume resistivity of a composite layer and an interfacial resistance between the composite layer and the collector were calculated from the potential distribution to measure an average resistance of the cathode current collector using an electrode resistance meter (Electrode Resistance Meter from HIOKI).

### (3) Measurement of cell resistance of secondary battery

At the point where the state of charge (SOC) of the secondary batteries according to the examples and comparative examples was set to 50%, a current of 1C was applied for 10 seconds, and the cell resistance was calculated through a change in voltage.

The evaluation results are shown in Table 1 below.

**[TABLE 1]**

| | Total thickness (µm) | Fracture rolling density (g/cm³) | Resistance of cathode collector (mΩ) | Cell resistance (mΩ) |
|---|---|---|---|---|
| Example 1 | 9 | 3.85 | 11.7 | 1.08 |
| Example 2 | 9 | 3.85 | 11.9 | 1.09 |
| Example 3 | 9 | 3.9 | 12.0 | 1.10 |
| Example 4 | 9 | 3.85 | 11.9 | 1.09 |
| Example 5 | 9 | 3.85 | 11.9 | 1.09 |
| Example 6 | 9 | 3.9 | 11.9 | 1.09 |
| Example 7 | 9 | 3.95 | 11.7 | 1.08 |
| Example 8 | 9 | 3.95 | 11.7 | 1.08 |
| Example 9 | 15 | 3.9 | 8.1 | 0.94 |
| Comparative Example 1 | 9 | 3.85 | 12.6 | 1.12 |
| Comparative Example 2 | 15 | 3.8 | 12 | 1.1 |
| Comparative Example 3 | 15 | 3.9 | 9 | 0.98 |

Referring to Table 1, in the examples using a cathode current collector doped with a metal element on the copper layer, the fracture rolling density and adhesive strength were improved, and the resistance of the cathode current collector and the secondary battery was reduced.

In Example 2 using magnesium as the metal element, the adhesive strength was slightly increased.

In Example 3 using zinc as the metal element, the resistance of the cathode current collector and the secondary battery was slightly increased.

In Examples 6 to 8, where nickel, magnesium and zinc were mixed and used as the metal elements, the fracture rolling density was slightly increased.

In Comparative Example 1, where no metal element was doped on the copper layer, the fracture rolling density and the adhesive strength were decreased compared to Example 1 having the same thickness, and the resistance of the cathode current collector and the secondary battery was increased.

Comparative Example 2, where no metal element was doped on the copper layer and only an aluminum foil was used, exhibited significantly reduced fracture rolling density and adhesive strength compared to Example 9 having the same thickness, and significantly increased resistance of the cathode current collector and the secondary battery.

Comparative Example 3, where no metal element was doped on the copper layer, exhibited reduced fracture rolling density and adhesive strength compared to Example 9 having the same thickness, and significantly increased resistance of the cathode current collector and the secondary battery.

## Claims

1. A cathode current collector for a lithium secondary battery comprising a stacked structure which comprises an aluminum layer, an aluminum-copper alloy layer formed on the aluminum layer, and a copper layer formed on the aluminum-copper alloy layer,
wherein a surface of the stacked structure is doped with at least one metal element.

2. The cathode current collector for a lithium secondary battery according to claim 1, wherein the aluminum-copper alloy layer comprises at least one of Al₂Cu, AlCu and AlCu₂.

3. The cathode current collector for a lithium secondary battery according to claim 2, wherein the aluminum-copper alloy layer has a stacked structure comprising two or more of an Al₂Cu-containing layer, an AlCu-containing layer, and an AlCu₂-containing layer.

4. The cathode current collector for a lithium secondary battery according to claim 1, wherein the copper layer comprises an undoped layer disposed on the aluminum-copper alloy layer and not doped with the metal element, and a metal doping layer disposed on the undoped layer and doped with the metal element.

5. The cathode current collector for a lithium secondary battery according to claim 4, wherein the metal doping layer comprises copper doped with the metal element.

6. The cathode current collector for a lithium secondary battery according to claim 1, wherein the metal element comprises at least one element of nickel, magnesium and zinc.

7. The cathode current collector for a lithium secondary battery according to claim 6, wherein the metal element comprises nickel, magnesium and zinc.

8. The cathode current collector for a lithium secondary battery according to claim 7, wherein a content of zinc among the metal elements is equal to or greater than a sum of the content of nickel and the content of magnesium.

9. The cathode current collector for a lithium secondary battery according to claim 1, wherein a doping content of the metal element is 0.1% by weight to 3% by weight based on a total weight of the stacked structure.

10. A lithium secondary battery comprising:
a cathode which comprises the cathode current collector according to claim 1 and a cathode active material layer formed on at least one surface of the cathode current collector; and
an anode disposed to face the cathode.

11. A method of preparing a cathode current collector for a lithium secondary battery comprising:
hot rolling an aluminum foil and a copper foil to form a first preliminary current collector comprising an aluminum-copper alloy layer; and
heat treating the first preliminary current collector to dope a surface of the first preliminary current collector with a metal element.

12. The method of preparing a cathode current collector for a lithium secondary battery according to claim 11, wherein the aluminum-copper alloy layer is formed between the aluminum foil and the copper foil.

13. The method of preparing a cathode current collector for a lithium secondary battery according to claim 11, wherein the step of heat treating the first preliminary current collector comprises:
performing a cold rolling process on the first preliminary current collector; and
performing an annealing process on the cold-rolled first preliminary current collector.

14. The method of preparing a cathode current collector for a lithium secondary battery according to claim 13, wherein the surface of the first preliminary current collector is doped with a metal element by the annealing process.

15. The method of preparing a cathode current collector for a lithium secondary battery according to claim 14, further comprising, after the cold rolling process and before the annealing process,
applying a doping solution containing the metal element to the surface of the cold-rolled first preliminary current collector.

16. The method of preparing a cathode current collector for a lithium secondary battery according to claim 13, wherein the cold rolling process and the annealing process are performed repeatedly.

17. The method of preparing a cathode current collector for a lithium secondary battery according to claim 16, wherein the cold rolling process and the annealing process comprise:
first cold rolling the first preliminary current collector to form a second preliminary current collector;
performing a first annealing process on the second preliminary current collector to form a third preliminary current collector;
second cold rolling the third preliminary current collector to form a fourth preliminary current collector, and
performing a second annealing process on the fourth preliminary current collector.

18. The method of preparing a cathode current collector for a lithium secondary battery according to claim 17, wherein a temperature of the first annealing process is higher than a temperature of the second annealing process.
